# EUROPEAN PATENT APPLICATION

(11) **EP 4 151 854 A1**
(43) Date of publication of application: **22.03.2023**
(21) Application number: 21803593.9
(22) Date of filing: 11.05.2021
(51) Int. Cl.: F03D 13/20, E04H 12/18

(54) **TELESCOPIC TOWER CONSTRUCTION METHOD**

(30) Priority: 12.05.2020 ES 202030434
(71) Applicant: Esteyco SA, 28036 Madrid (ES)
(72) Inventor: SERNA GARCÍA-CONDE, José Salustiano, 28036 Madrid (ES); SARRASÍN GÓMEZ, David, 28036 Madrid (ES)
(74) Representative: Tribalyte Ideas
(86) International application number: PCT/ES2021/070329
(87) International publication number: WO 2021/229125

(57) **Abstract**

The present invention relates to a construction method for a telescopic-type wind turbine tower (1), comprising the steps of: a) constructing at least two concentric tubes (2, 2') of the tower (1) in such a way that, temporarily, said concentric tubes (2, 2') are located essentially at the same height, one inside the other. Advantageously, said method comprises the following substeps: a1) arranging formwork means (4) at a first concreting height; a2) employing said formwork means (4) to concrete first sections (3) of at least two different concentric tubes (2, 2'), said sections (3) being located at the first concreting height; a3) raising said formwork means (4) to a second concreting height; and a4) employing said formwork means (4) to concrete second sections (3') of at least two different concentric tubes (2), said second sections (3') being located at the second concreting height.

## Description

### FIELD OF THE INVENTION

The present invention relates to the civil engineering sector and, particularly, to tower construction techniques for the support of wind turbines. More specifically, the invention relates to a construction method for telescopic deployment wind turbine towers, by means of a height sequential formwork.

### BACKGROUND OF THE INVENTION

Wind turbine towers have traditionally been constructed in steel, with a frustoconical/cylindrical shape, being shaped by means of tubes with steel sheets, which form sections, which are attached to one another by means of flanges welded to the ends of each section, and with holes provided for them to be attached to one another by means of screwed bolts.

Likewise, especially in the case of higher towers, concrete towers of various designs have been made. These towers can be made completely of concrete or, on other occasions, they are hybrid towers, of concrete up to a certain height and, after that height, they are of steel tube. With respect to the structure of the concrete towers, there are many variants, with two main manufacturing possibilities:
- Concrete towers made from segments which are prefabricated in molds and are then moved to the position in which the tower is assembled. There are, in turn, different types of these towers: there are towers made from prefabricated rings, and towers made from prefabricated voussoirs which are later attached forming tubular sections, and said sections are finally assembled, one on top of the other, to form the tower.
- Although they are less abundant, there are also concrete towers manufactured in situ, by means of using gliding formworks or climbing formworks. These towers are constructed without any prefabrication process, placing formworks and concreting the tower in its definitive position section by section.

The use of concrete towers manufactured in situ is not very widespread, because these towers have three major problems:
- The geometry of the tower has a variable diameter (around 6-9 m in diameter in the base, with 3-4 m at the top), which forces having formworks which must be replaced at every height level (referred to as "climb") with a different formwork, or having formworks the geometry of which can be adjusted in each climb. This implies a high cost of the formworks and a lower efficiency, because the geometric adjustments of the formwork make them more expensive and time and cost consuming.
- The process in itself is slow, taking place at maximum paces of approximately, six meters of climbing every one or two days, entailing 30-40 days of work to make a tower of 120 m, which means a very insufficient pace for the construction periods which are usually handled in the sector.
- It requires cranes of a considerable size for the climbs after a certain height, in addition to entailing a high inefficiency, given that the staff and the necessary materials and tools must be lifted to the height level at which the work is to be done.

The result of these drawbacks is that the construction speed is not enough, and multiplying the number of formwork and crane equipment increases the costs considerably. Therefore, concrete towers are hardly constructed in situ, even when in situ concrete has the advantage of eliminating the requirement of using a factory to make the prefabricated parts, as well as of the transport of said parts. These limitations generate, in the present technical field, the need to develop new constructive techniques for telescopic towers, mainly applicable to in situ concreting methods, which improve the efficiency of known techniques. The present invention is aimed at solving said need, by means of a novel telescopic tower construction method, which benefits from carrying out a height sequential formwork of the plurality of sections forming said towers.

### BRIEF DESCRIPTION OF THE INVENTION

In light of the problems of the state of the art set forth in the previous section, one object of the present invention relates, mainly, to a method according to any of the claims of the present document, which is based on a novel formwork system, especially designed for carrying out said method.

As a result of the method of the invention, it is possible to construct a concrete tower using the techniques typical of in situ construction, but in a more efficient and quicker manner, which in addition allows increasing the total height of the towers without damaging the process and means necessary for assembling the wind turbine which must operate at the head of the tower.

The tower geometry which is considered is of the telescopic type, with sections of a preferably constant, circular, or polygonal (for example hexagonal) cross-section, in a manner similar to the structure of a spyglass. In a preferred embodiment, the tubes forming the tower have a constant cross-section, but each tube has a different diameter, decreasing as it goes higher. The joints used to fix the definitive position of said tubes, as well as of the attachment therebetween, are inverted such that a lower flange in the base of each tube projects outwards (it has a larger outer diameter than the section itself) whereas an upper flange in the head of the tube projects inwards (it has a smaller inner diameter). As a result of this system of horizontal joints, firstly, the telescoping of the tubes is enabled and, secondly, it is achieved that the tower has a diameter increasing from top to bottom, which improves its structural efficiency.

The characteristic elements of the tower object of the invention reside mainly in its constructive process, which is carried out by means of techniques typical of in situ manufacture, with a climbing or gliding formwork system. Furthermore, the process has the added peculiarity that said system allows the tower to comprise several tubes at the same time, wherein each tube is shaped as an overlay of sections of formwork in height, preferably using a formwork of several inner faces and several outer faces, instead of a conventional formwork made up for a single outer face and another single inner face.

This technique is used for at least two segments of the tower, and not necessarily in its entire length: there may be an upper part of each section which is prefabricated, or of another material, or which is concreted one by one instead of two or more sections simultaneously.

Once the different sections of the tower have been manufactured with this technology, the prefabricated sections are lifted to their definitive height, by means of using hydraulic jacks, or by means of any other technique.

The telescopic tower constructed according to the invention eliminates the problems typical of the in situ construction of concrete towers for wind turbines, incorporating the following advantages:
- The substantially constant cross-section of each tube allows simple formworks, for which adjustment is not necessary between one climb and the following one. This entails, therefore, carrying out formworks in a much quicker and cheaper manner.
- Working on two or more sections in each climbing or concreting height allows a much quicker progress of the construction, since in each climbing, in fact, the equivalent of two or more climbs are performed according to traditional techniques , depending on the number of telescopic sections which are constructed with this technique.
- Since the tower is telescopic and is constructed folded, the working height in the climbs is limited to the length of one single section. Nevertheless, with it, the sections which, once lifted, will be at a greater height can be constructed simultaneously. This saves an important amount of construction crane costs and process time (working at levels between 5 and 50 m in height, instead of between 5 and 140 m in height).
- The wind turbine can preferably be assembled before the telescoping of the tower, which reduces the height for its assembly and, consequently, reduces the cost and increases the availability of cranes with sufficient capacity for said assembly of the wind turbine.

The tower manufactured in this way requires, preferably, a specifically designed system, which has three types of formwork:
- An outer formwork, which shutters the outer face of the tube of the tower. This formwork is similar to the one which would be used for any conventional tower of a constant cross-section, but not telescopic.
- An inner formwork, which shutters the inner face of the innermost section of the tube of the tower. It is also a conventional formwork, similar to the one which would be used to construct any tower or shaft with this technology.
- One or more intermediate formworks, by way of parts with double concentric panel, arranged between two contiguous and concentric telescopic tubes of the tower. Preferably, one of these intermediate formworks is used if the tower has only tubes manufactured with this technology, two if it has three sections, and so on. Each of these formworks is actually the sum of an inner formwork for the outermost section of the two sections between which it is placed and an outer formwork for the innermost section of the two sections between which it is placed. They can be two independent formworks or, due to the small distance between both of them, one single element with two formwork elements.

The manufacturing method for the tower is therefore based on the fact that each formwork/concreting/climb process is carried out successively with all the formworks, such that the following climb starts when the concreting of the previous climb of all the sections has finished. Said succession can be carried out continuously, with processes similar to those of gliding formworks, or in discontinuous advance steps, with processes similar to those of climbing formworks.

Normally, in telescopic towers of this type, the shape of the flanges or finials at the upper and /or lower ends of each telescopic tube of the tower prevents finishing the section with the same formwork. Therefore, to make that part of the tower, prefabricated parts can be used or a specific formwork for these upper and lower areas of the sections can be used.

The tower fabricated with this method may in turn be a hybrid tower, such that it has sections manufactured with this technology and some additional section, preferably at its upper part, manufactured in another material or with another technology, preferably conventional steel sections.

### DESCRIPTION OF THE DRAWINGS

The previous and other features and advantages will be fully understood from the detailed description of the invention, as well as from the examples of preferred embodiment referred to the attached figures, which are described in the following paragraphs.
Figures 1-2 show a telescopic tower of three concentric sections, a base tube and two deployable tubes, in the states prior to and after the lifting of said deployable tubes, respectively.
Figure 3 shows a detail view of the formwork of the invention, at a first height of the sections of the concentric tubes of a telescopic tower.
Figure 4 shows a detail view of the formwork of the invention, at a second height of the sections of the concentric tubes of a telescopic tower.
Figures 5a-5d show successive phases of construction of different sections of the concentric tubes of a telescopic tower.
Figures 6a-6d show successive phases of construction of upper flanges of a telescopic tower with three concentric tubes.

### Numerical references used in the drawings:

| | |
|---|---|
| (1) | Tower |
| (2, 2, 2") | Concentric tubes |
| (3, 3') | Sections of the concentric tubes |
| (4) | Formwork means |
| (5) | Concentric double panel part |
| (6) | Upper flange of a concentric tube |
| (7) | Lower flange of a concentric tube |
| (8) | Recoverable embedded formwork |
| (9) | Wind turbine |

### DETAILED DESCRIPTION OF THE INVENTION

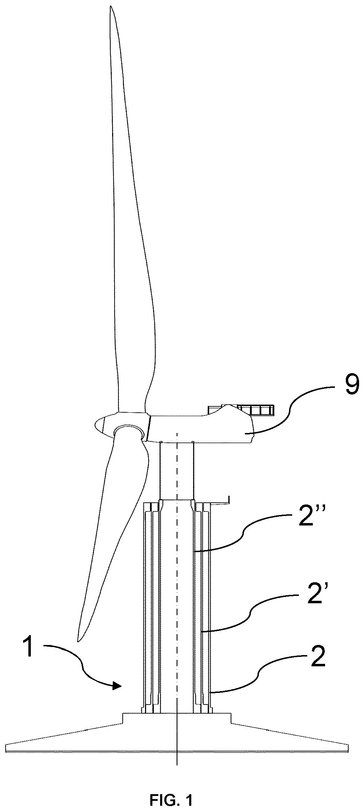

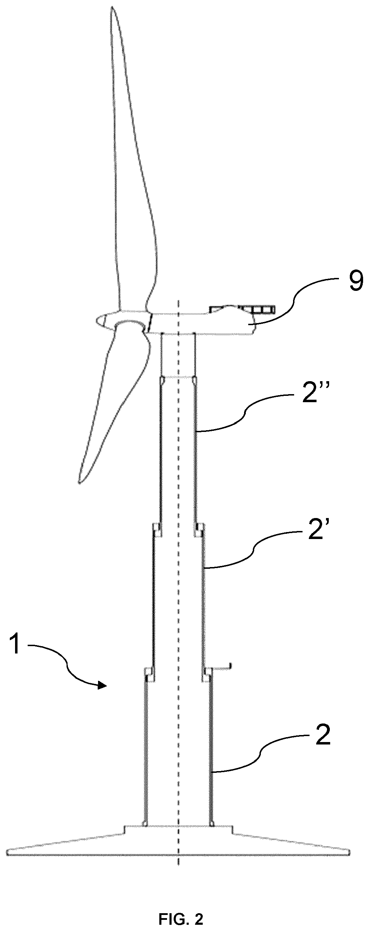

A detailed description of the invention is set forth below, referred to different preferred embodiments thereof, based on Figures 1-6 of the present document. Said description is provided for purposes that are illustrative, but non-limiting, of the claimed invention.

According to what is described in the previous sections, the invention preferably relates to a construction method for telescopic-type wind turbine towers (1), formed by a plurality of concentric tubes (2, 2', 2"), preferably including a base tube (2) and one or more tubes (2', 2") which are deployable in height, by means of the assembly and lifting thereof. An example of said towers (1) is shown in Figures 1-2 of the present document, wherein there is depicted a telescopic tower (1) with a base tube (2) and two deployable tubes (2',2"), in the states prior to and after the lifting of said deployable tubes (2', 2"), respectively.

The invention is mainly applicable to towers (1) in which the tubes (2, 2', 2") are of the telescopic type and adopt a concentric configuration (as the one depicted in Figures 1-2). Nevertheless, it can also be applied in towers (1) in which only part of them is made up of telescopic concentric tubes (2, 2', 2"), whereas another part comprises any other type of tower section or segment known in the art.

The method of the invention preferably comprises the following steps:
a) Constructing at least two concentric tubes (2, 2') of the tower (1) in such a way that, temporarily, said concentric tubes (2, 2') are located essentially at the same height, one inside the other (Figure 1). In a preferred embodiment of the invention, said concentric tubes (2, 2') are of the cylindrical type, which is advantageous since their geometry remains constant in their entire height. Nevertheless, they can also adopt a frustoconical shape or any other geometry, within the object of the invention. Likewise, in another preferred embodiment, the concentric tubes (2, 2') have walls of constant thickness for most or all of their height or, alternatively, they can have a variable thickness, with the same previous considerations. Likewise, in another embodiment, the cross-section of the tubes (2, 2') is circular, but it could also be polygonal or of any other type, without thus departing from the scope of the invention.
b) Raising at least one concentric tube (2') to deploy the tower (1) in a telescopic manner.
c) Connecting different concentric tubes (2, 2') of the tower (1) to each other.

Likewise, and in an essential manner in the invention, at least two of said concentric tubes (2, 2') (2) of the tower (1) are of concrete and at least partly constructed with the axis of the tube (2, 2') in a vertical position and successively concreting different sections (3, 3') of said concentric tubes (2) at different heights. Said successive concreting allows completing different levels of the tubes (2, 2') by means of constructing a succession of ring-shaped sections (3, 3'), which are overlaid until completing said tubes (2, 2') with their definitive height extension.

Advantageously in the present invention, step a) of the method in turn comprises the following substeps:
a1) Arranging formwork means (4) at a first concreting height. Said formwork means (4) can be, in different embodiments of the invention, of the climbing or gliding type, of the self-climbing type (i.e., they can raise themselves), or they can be raised by other means, such as a crane for example. Likewise, the formwork means (4) can be metallic, of wood or any other material known in the art.
a2) Concreting, through said formwork means (4), first sections (3) of at least two different concentric tubes (2, 2'), said sections (3) being located at a first concreting height.

Preferably, the steel bars or frameworks, which will be embedded in the concrete, must be placed before concreting, as is known in the art. Said framework can be assembled at the corresponding concreting height, but it can also be advantageous to pre-assemble it in the form of cages at ground level, to then raise said pre-assembled framework cages with a crane to their corresponding height. This has the advantage of allowing to carry out more work at ground level and not at a height, and furthermore it allows reducing the executing times for each section (3), since the pre-assembly of ironwork cages can be done beforehand, whereas if the ironwork is assembled at the corresponding concreting height, said assembly cannot be started until the previous section has been completed.

Although in a preferred embodiment of the invention, the concreting by sections (3, 3') of the tower (1) is carried out successively, said succession must generally be interpreted as any sequence of arrangements of the formwork means (4) in height, including the situation in which the concreting is carried out, entirely or partly, without interruption, as is known in the art of gliding formworks (4). Operations of concreting and raising the formwork means (4) can therefore be carried out simultaneously, without thus departing from the scope of the invention.

Likewise, although the concreting of at least two concentric tubes (2, 2') is already advantageous in the present invention, in a preferred embodiment thereof said concreting will be carried out at every height of all the concentric tubes (2, 2', 2"), which entails a considerable advantage for the execution times of the tower (1) which, by means of the method of the invention, are substantially reduced compared to other alternatives of the state of the art. The method additionally prevents the need to lift complete sections (3, 3') by means of high-capacity cranes, which also reduces the costs corresponding to the construction of the tower (1).
a3) Raising said formwork means (4) to a second concreting height. With the aim of facilitating said raising, as well as carrying out other tasks, the formwork means (4) can incorporate another series of support elements, as is well known in the art and, in particular, elements for facilitating the access and working conditions of the personnel, such as stairs, elevators, work platforms, etc. Likewise, in a preferred embodiment of the invention, in the step of raising the formwork means (4), the latter are supported on the first sections (3) of the tower previously concreted.

In different embodiments, the formwork means (4) can be raised by means of a crane or by raising means incorporated in the formwork itself (such as those used in self-climbing formworks, known in the art). The formwork (4) can be raised from one concreting height directly to the following concreting height, but it can also pass through another intermediate position between both concreting heights, without thus departing from the scope of the invention. For example, the formwork (4) can be lowered to the ground level to clean it, adjust its geometry or any other action, before raising it to the following concreting height.
a4) Employing the formwork means (4) to concrete second sections (3') of at least two different concentric tubes (2, 2'), said second sections (3') being located at a second concreting height greater than the first concreting height of substep a2).

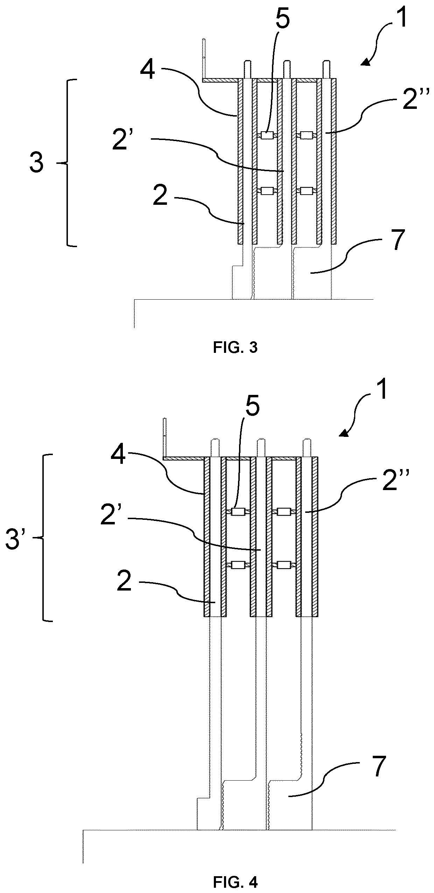

Figures 3-4 show detail views of the formwork (4) of the invention at two different heights of the sections (3, 3') of its concentric tubes (2, 2').

In a preferred embodiment of the invention, the method further comprises the substep of:
a5) successively repeating substeps a3) and a4), passing through multiple concreting heights and thus increasing, by means of the arrangement of multiple sections (3, 3'), the height of at least two concentric tubes (2) of the tower (1) until said concentric tubes (2) reach the desired height. Preferably, for this embodiment the formwork means (4) are reusable, in such a way that they are moved after completing step a5), being able to be reused in another location, for example for constructing another tower (1).

In another preferred embodiment of the invention, the formwork means (4) comprise concentric double panel parts (5) (Figures 3-6) which allow shuttering, in one and the same position, the outer face of a concentric tube (2) of the tower (1) and the inner face of another concentric tube (2') of the tower (1). More preferably, said concentric double panel parts (5) are retractable and/or extendable, such that they can be separated from the already concreted section (3), thus facilitating its raising prior to the concreting of the following section (3).

In another preferred embodiment of the method of the invention, at least part of the concentric tubes (2, 2', 2") of the tower (1) comprise an upper flange (6) in the head of a concentric tube (2) and/or a lower flange (7) in the base of a concentric tube (2) (Figures 3-6), wherein said method further comprises the substep of:
a6) completely or partly concreting at least one upper (6) and/or lower (7) flange, in a position separate from the concentric tube (2) to which it belongs, thus generating a prefabricated flange part. Nevertheless, part of the concentric tubes (2, 2', 2") and, in particular, for example the upper (6) or lower (7) flanges, can be constructed by means of different methods, without thus departing from the scope of the invention. Said different methods can include, for example, said flanges (6, 7) completely or partly, or, for example, employing specific formwork means (4) for concreting said flanges (6, 7). The prefabricated parts thus used can comprise the entire flange (6, 7) or a part thereof. In a preferred embodiment of the invention, the flange (6, 7) is partly formed by said prefabricated part and, another part of the flange (6, 7), is concreted in situ in contact with said prefabricated part.

In another preferred embodiment of the invention, the construction method further comprises, before substep a2), the substep of:
a7) arranging at least one prefabricated flange part of a lower flange (7) of a concentric tube (2) in the position in which said concentric tube (2) is to be constructed wherein, in substep a2), said concentric tube (2) is at least partly concreted on said prefabricated flange part. In other words, the prefabricated flange part can, for example, comprise the lower part of the lower flange (7), such that it can act as a precast slab and/or lost formwork, to support the fresh concrete during the concreting of another part of said lower flange (7).

In another preferred embodiment of the invention, the method further comprises, after substep a4), the substep of:
a8) arranging at least one prefabricated flange part of an upper flange (6) of a concentric tube (2) on a previously concreted section (3) of said concentric tube (2).

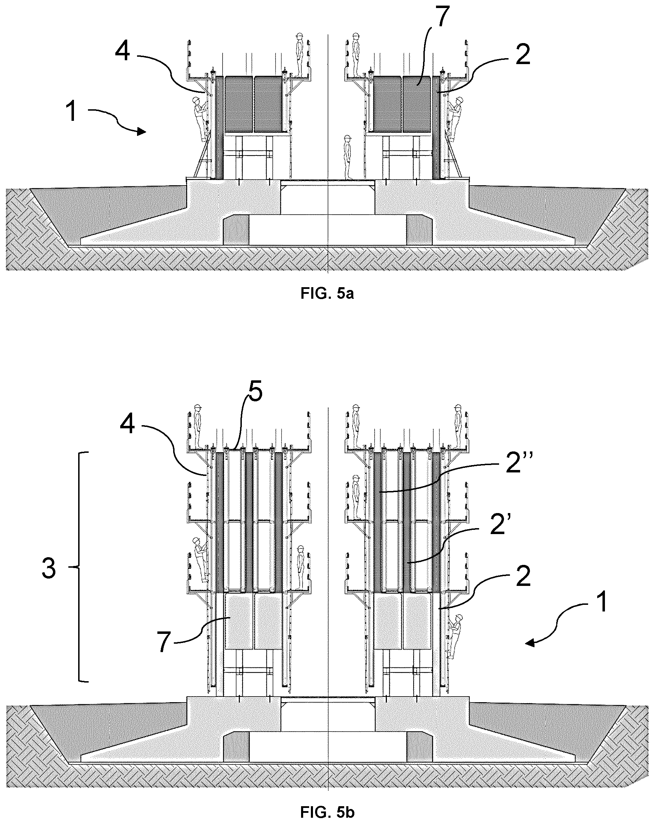

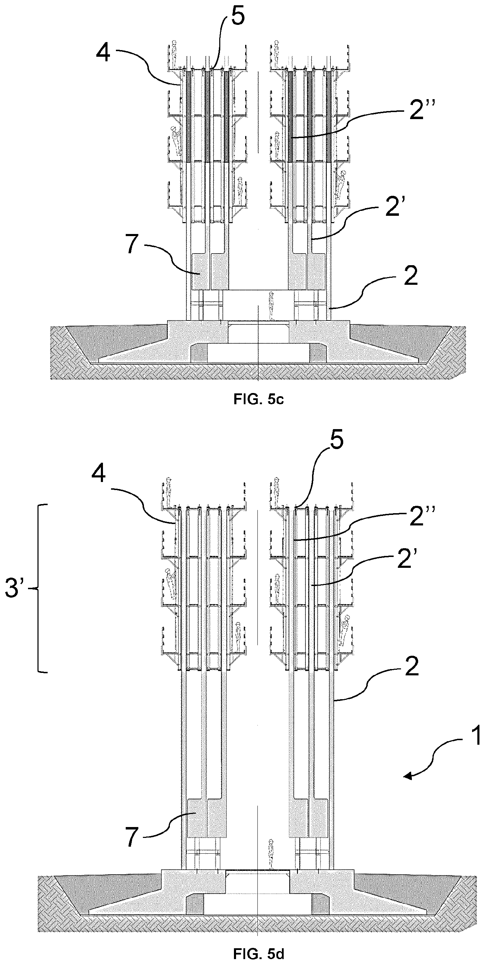

Figures 5a-5d show an example of successive phases of construction of different sections (3, 3') of three concentric tubes (2, 2', 2") of a telescopic tower (1), according to a preferred embodiment of the invention.

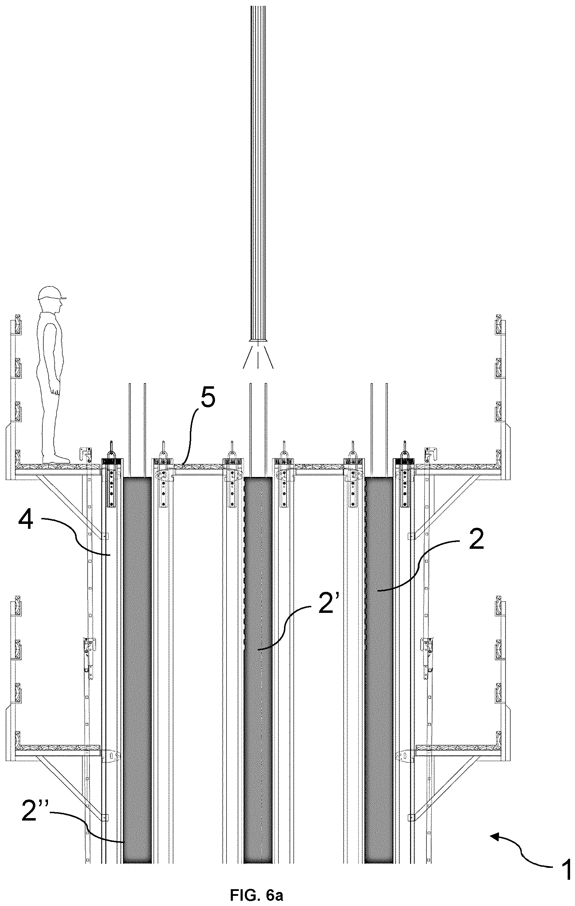

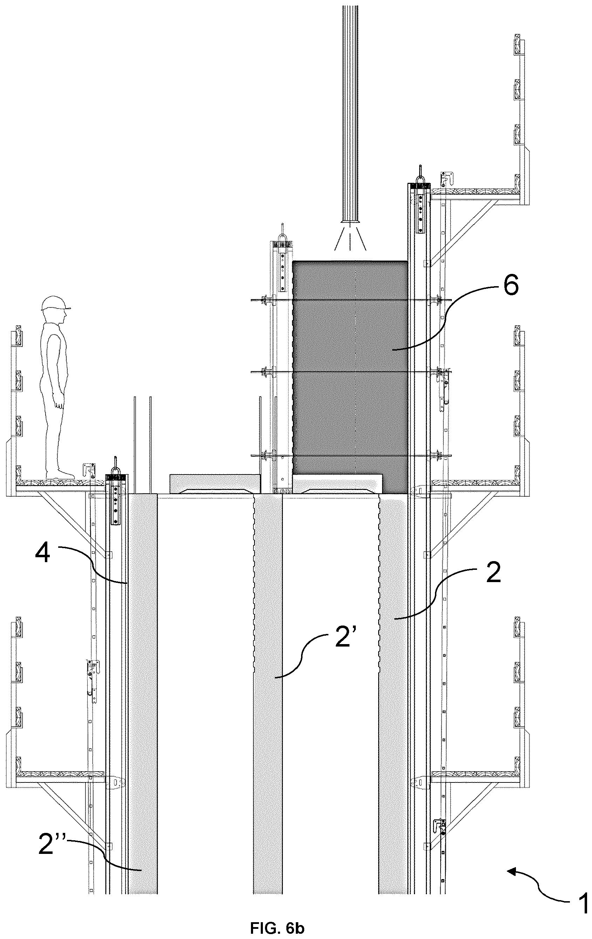

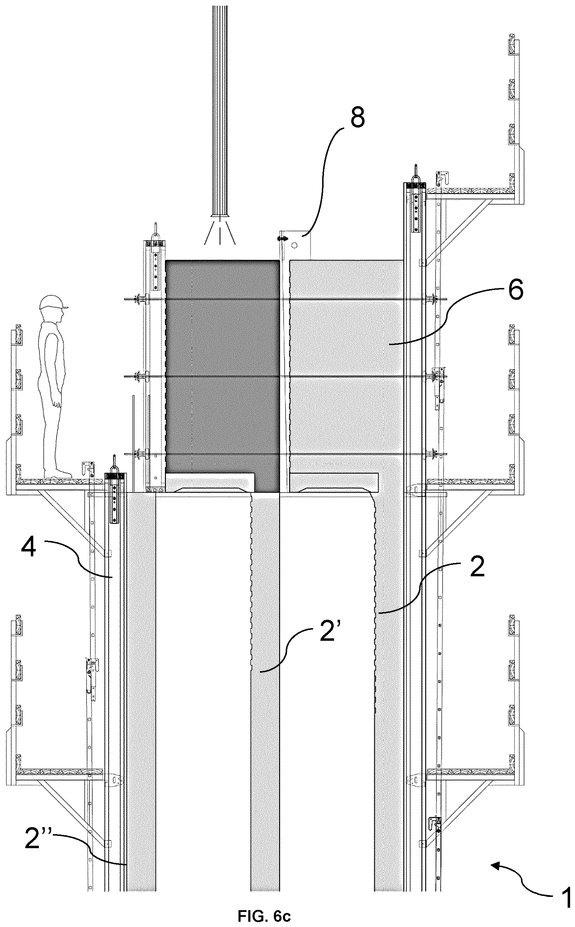

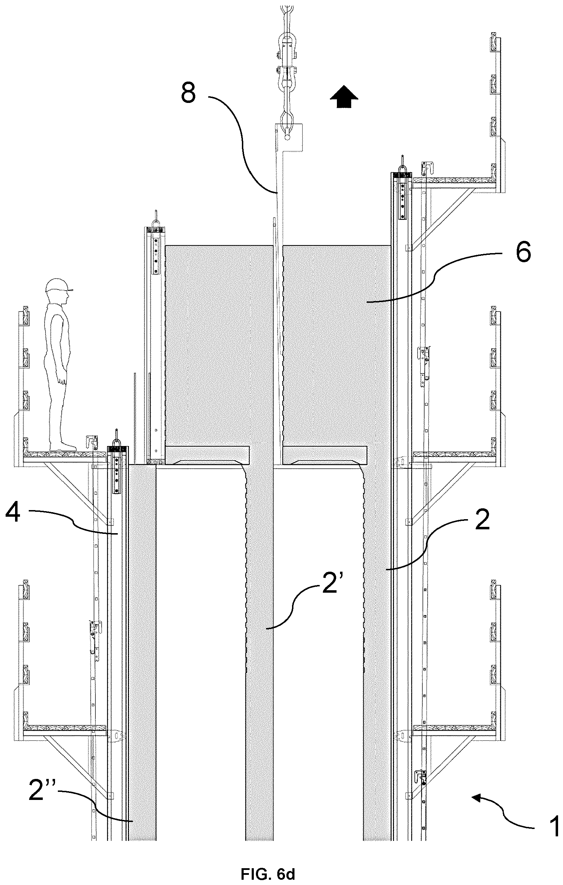

In another preferred embodiment of the invention, for concreting at least part of the upper flanges (6) or of the lower flanges (7), a recoverable embedded formwork (8) is employed, which is located between two flanges (6,7) of contiguous concentric tubes (2, 2') during the concreting thereof. The recoverable embedded formwork (8) preferably comprises a panel with wedge-shaped geometry, to facilitate its removal. Said wedge shape facilitates the removal of said embedded formwork (8) since it provides a certain demolding angle for taking out the panel from the space comprised between two previously concreted flanges (6, 7) (Figure 6).

The recoverable embedded formwork (8) which is located between the flanges (6,7) of two contiguous concentric tubes (2, 2') can be recovered after concreting the flanges (6, 7). It can also be recovered, at least partly, during step b) as a result of the raising of one of said concentric tubes (2') with respect to the other one (2). In this second case, when the tube (2') rises, it drags the wedge-shaped part, in such a way that when it has risen enough, it can already be removed.

In another preferred embodiment of the invention, the method further comprises the substep of:
a9) Placing a wind turbine (9) on said wind turbine tower (1), employing a wind turbine assembling crane wherein, during substep a7), said wind turbine assembling crane is employed to lift at least one prefabricated flange part of at least one upper flange (6) of a concentric tube (2) (Figure 6). This possibility is advantageous given that the prefabricated parts of the upper flange (6) can be quite heavy and they are located at a great height. Therefore, placing them can involve high-cost cranes. Taking advantage of the crane which will be used in any case to assemble the wind turbine (9), synergies are generated in the operations and execution times are thus reduced, with the subsequent cost-effectiveness.

Figures 6a-6d show successive phases of construction of upper flanges (6) of three concentric tubes (2, 2', 2") of a telescopic tower (1), by means of using a recoverable embedded formwork (8), according to a preferred embodiment of the invention.

## Claims

1. Construction method for a telescopic-type wind turbine tower (1), comprising the following steps:
a) constructing at least two concentric tubes (2, 2') of the tower (1) in such a way that, temporarily, said concentric tubes (2, 2') are located essentially at the same height, one inside the other;
b) raising one or more concentric tubes (2') to deploy the tower (1) in a telescopic manner;
c) connecting different concentric tubes (2, 2') of the tower (1) to one another; wherein at least two of said concentric tubes (2, 2') of the tower (1) are essentially of concrete and at least partly constructed with the axis of said tubes (2, 2') in a vertical position vertical and successively concreting a plurality of sections (3) thereof;
and said method being **characterized in that** step a) in turn comprises the following substeps:
a1) arranging formwork means (4) at a first concreting height;
a2) employing said formwork means (4) to concrete first sections (3) of at least two different concentric tubes (2, 2'), said sections (3) being located at said first concreting height;
a3) raising said formwork means (4) to a second concreting height;
a4) employing said formwork means (4) to concrete second sections (3') of at least two different concentric tubes (2, 2'), said second sections (3') being located at said second concreting height.

2. Method according to the previous claim, further comprising the substep:
a5) successively repeating substeps a3) and a4), passing through multiple concreting heights and increasing, by means of the overlay of sections (3, 3'), the height of at least two concentric tubes (2, 2') of the tower (1), until said concentric tubes (2, 2') reach a desired height.

3. Method according to any of the previous claims, wherein said formwork means (4) comprise concentric double panel parts (5) which allow shuttering, in one and the same position, an outer face of a concentric tube (2, 2') of the tower (1) and an inner face of another concentric tube (2, 2') of the tower (1).

4. Method according to any of the previous claims, wherein at least part of the concentric tubes (2, 2') of the tower (1) comprise an upper flange (6) in the head of the concentric tube (2, 2') and/or a lower flange (7) in the base of the concentric tube (2, 2'); wherein said method further comprises the substep of:
a6) concreting at least part of at least one upper (6) and/or lower (7) flange, in a position separate from the concentric tube (2, 2') to which it belongs, thus generating a prefabricated flange part.

5. Method according to the previous claim, comprising, before substep a2), the substep:
a7) arranging at least one prefabricated flange part of a lower flange (7) of a concentric tube (2, 2'), in the position in which said concentric tube (2, 2') is to be constructed, wherein, in step a2), said concentric tube (2, 2') is at least partly concreted on said prefabricated flange part.

6. Method according to claim 4, further comprising, after substep a4), the substep of:
a8) arranging at least one prefabricated flange part of an upper flange (6) of a concentric tube (2, 2') on a previously concreted section (3) of said concentric tube (2).

7. Method according to any of claims 4-6, wherein, for concreting at least part of the upper flanges (6) or of the lower flanges (7), a recoverable embedded formwork (8) is employed, which is located between two flanges (6,7) of contiguous concentric tubes (2, 2') during the concreting thereof.

8. Method according to the previous claim, wherein the recoverable embedded formwork (8) comprises a panel with wedge-shaped geometry to facilitate its removal.

9. Method according to any of claims 7-8, wherein the recoverable embedded formwork (8) which is located between the flanges (6,7) of two contiguous concentric tubes (2, 2') is at least partly recovered during step b) as a result of the raising of one of said concentric tubes (2, 2') with respect to the other one.

10. Method according to any of the previous claims, further comprising the substep of:
a9) placing a wind turbine (9) on said wind turbine tower (1) employing a wind turbine assembling crane (10);
wherein, during substeps a7) and/or a8), said wind turbine assembling crane (10) is employed to lift at least one prefabricated flange part of at least upper flange (6) of a concentric tube (2, 2').
